# EUROPÄISCHE PATENTANMELDUNG

(11) **EP 1 985 888 A1**
(43) Veröffentlichungstag der Anmeldung: **29.10.2008**
(21) Anmeldenummer: 08005265.7
(22) Anmeldetag: 20.03.2008
(51) Int. Cl.: F16F 9/512

(54) **Schwingungsdämpfer mit amplitudenselektiver Dämpfkraft**

(30) Priorität: 27.04.2007 DE 102007019904
(71) Anmelder: ZF Friedrichshafen AG, 88038 Friedrichshafen (DE)
(72) Erfinder: Hammer, Thomas, 97653 Bischofsheim (DE)

(57) **Zusammenfassung**

Schwingungsdämpfer mit amplitudenselektiver Dämpfkraft, umfassend eine Kolbenstange (5), die in einem dämpfmittelgefüllten Zylinder (7) axial beweglich geführt ist, wobei die Kolbenstange (5) eine Kolbenanordnung trägt, die den Zylinder (7) in einen kolbenstangenseitigen (9) und einen kolbenstangenfernen (11) Arbeitsraum unterteilt, wobei die Kolbenanordnung eine Baueinheit aufweist, die zwischen den Arbeitsräumen eine Strömungsverbindung (39) bestimmt, die in Abhängigkeit der Kolbenstangenbewegung von einem zwischen zwei Anschlagflächen axial beweglichen Schaltring (37) gesteuert wird, der über jeweils mindestens einen Bypass (47,49) pro amplitudenselektiv gesteuerter Dämpfkraftrichtung beidseitig innerhalb der Strömungsverbindung (39) mit Dämpfmedium beaufschlagt wird, wobei die Strömungsverbindung (39) und der mindestens eine Bypass (47,49) von einer Reihenanordnung mehrere Hülsenkörper gebildet werden, wobei sämtliche in der Reihenanordnung zwischen den beiden Anschlagflächen (33,35) verwendeten Hülsenkörper (27,29,31) jeweils axial verlaufende Kanäle für den mindestens einen Bypass (47,49) und auf ihrer Mantelfläche die Strömungsverbindung (39) zwischen den Anschlagflächen (33,35) aufweisen.

## Beschreibung

Die Erfindung betrifft einen Schwingungsdämpfer mit amplitudenselektiver Dämpfkraft gemäß dem Oberbegriff von Patentanspruch 1.

Aus der DE 10 2004 058 965 A1, der DE 10 2005 020 293 A1 oder der DE 10 2005 045 267 B3 ist ein gattungsbildender Schwingungsdämpfer bekannt. Die die amplitudenselektive Dämpfkraft bewirkenden Baueinheit umfasst u. a. einen hülsenförmigen Grundträger, der zusammen mit einer Distanzhülse, zwei Voröffnungsringen sowie einem Verteilerringen mehrere getrennte Strömungswege bildet, s. Fig. 1, DE 10 2005 045 267 B3. Die genannten Bauteile werden bevorzugt aus Sintermetall hergestellt, um die komplizierte Formgebung in Verbindung mit einer ausreichenden Maßhaltigkeit kostengünstig erreichen zu können.

Trotz der Reihenanordnung sind die genannten Bauteile noch ziemlich kompliziert ausgestaltet. Des Weiteren führt eine größere Einzelteilanzahl zu einem größeren Leckagerisiko, das aufgrund der geschachtelten Bauweise nur schwerlich durch Dichtungen zu minimieren ist.

Aufgabe der vorliegenden Erfindung ist eine die für die amplitudenselektive Dämpfkraft verwendete Baueinheit hinsichtlich der Teileanzahl und Teilevielfalt zu optimieren.

Erfindungsgemäß wird die Aufgabe dadurch gelöst, dass sämtliche in der Reihenanordnung zwischen den beiden Anschlagflächen verwendeten Hülsenkörper jeweils axial verlaufende Kanäle für den mindestens einen Bypass und auf ihrer Mantelfläche die Strömungsverbindung zwischen den Anschlagflächen aufweisen.

Der große Vorteil im Vergleich zum Stand der Technik besteht darin, dass die Bauteile innerhalb der Reihenanordnung nur axial geschichtet sind und keine koaxiale Anordnung besteht. Dadurch gibt es in radialer Richtung keine doppelwandigen Bereiche, die eine unzureichende Bauraumausnutzung darstellen würden.

In weiterer vorteilhafter Ausgestaltung besteht die Reihenanordnung aus einem Mittelring und zwei Kopfringen. Die Kopfringe sind als Gleichteile ausgeführt, so dass sich damit ein Kostenvorteil einstellt. Der Mittelring kann richtungsunabhängig verbaut werden.

Damit die Bypässe für die Strömungsverbindung für beide Durchströmungsrichtungen garantiert fehlerfrei montiert werden, ist zwischen dem Mittelring und den Kopfringen in Umfangsrichtung ein Drehorientierungsprofil ausgeführt ist.

Die Reihenanordnung zentriert sich selbst, so dass auf eine stützende Hülse verzichtet werden kann. Dafür weisen die Hülsenkörper innerhalb der Reihenanordnung Zentrierflächen zur radialen Positionierung auf.

In weiterer vorteilhafter Ausgestaltung sind die Hülsenkörper innerhalb eines axialen Überdeckungsbereichs jeweils mit einem zueinander ausgerichteten offenen Stufenprofil ausgeführt, die im montierten Zustand eine Ringnut für eine Dichtung bilden. Das offene Stufenprofil lässt sich sintertechnisch leicht herstellen, insbesondere entformen, so dass auf eine spanende Bearbeitung für etwaige Dichtungsnuten verzichtet werden kann. Über die eingelegten Dichtungen ergibt sich eine Klemmwirkung zwischen den Hülsenkörpern, so dass eine handhabbare Baueinheit vorliegt.

Die gesamte Reihenanordnung lässt dadurch leicht montieren, da sie zwischen einem Spannring und einem Anschlussring an dem Kolben fixiert ist.

Gemäß einem vorteilhaften Unteranspruch bilden der Kopfring mit einer axialen Stirnfläche in Verbindung mit dem Spannring und/oder dem Anschlussring eine Schaltringnut für einen axial beweglichen Ventilring, so dass auch für dieses technische Detail keine spanende Bearbeitung notwendig ist.

Anhand der folgenden Figurenbeschreibung soll die Erfindung näher erläutert werden.

Es zeigt:
- Fig. 1: Gesamtansicht der Kolbenanordnung
- Fig. 2: Explosionsdarstellung der Hülsenkörper aus der Kolbenanordnung
- Fig. 3: Alternativvariante zur Fig. 1

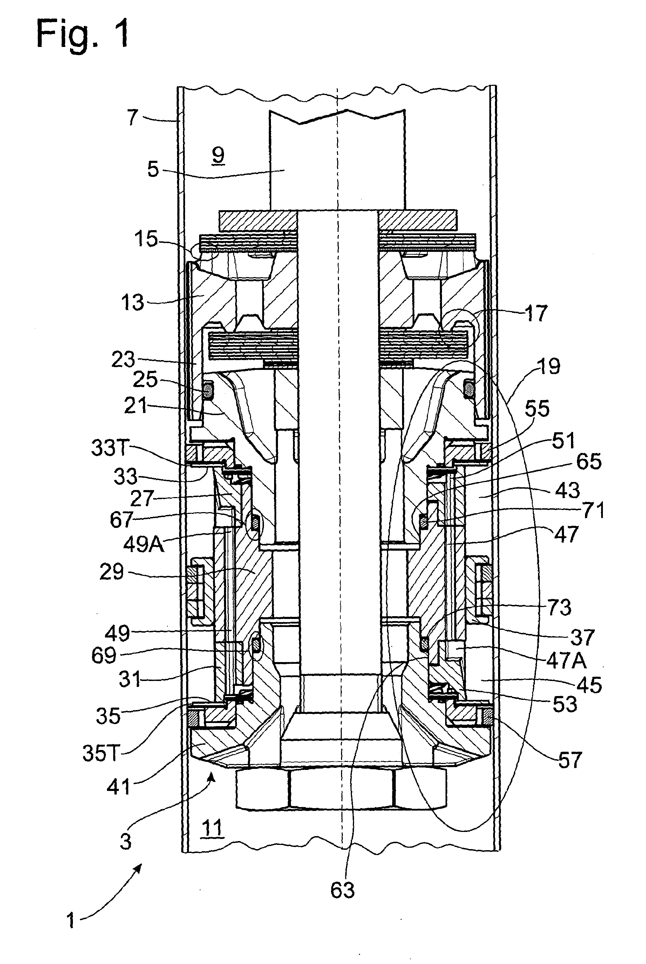

Die Figur 1 beschränkt sich in ihrer Darstellung auf einen Ausschnitt aus einem Schwingungsdämpfer 1 im Bereich einer Kolbenanordnung 3 an einer axial beweglichen Kolbenstange 5 innerhalb eines Zylinders 7. Die Kolbenanordnung 3 unterteilt den Zylinder 7 in zwei Arbeitsräume 9; 11 und umfasst einen konventionellen Kolbenventilkörper 13 mit Dämpfventilen 15; 17 für beide Durchströmungsrichtungen der Kolbenanordnung.

An dem Kolbenkörper 13 stützt sich radial und axial eine Baueinheit 19 ab, die ein amplitudenselektives Dämpfkraftverhalten des Schwingungsdämpfers bewirkt. Die Baueinheit umfasst eine Reihenanordnung mehrerer Hülsenteile. Ein Anschlussring 21 zentriert sich innerhalb eines Kolbenhemdes 23, wobei eine erste Ringdichtung 25 eine Leckage zwischen der Baueinheit 19 und den Dämpfventilen 15; 17 verhindert.

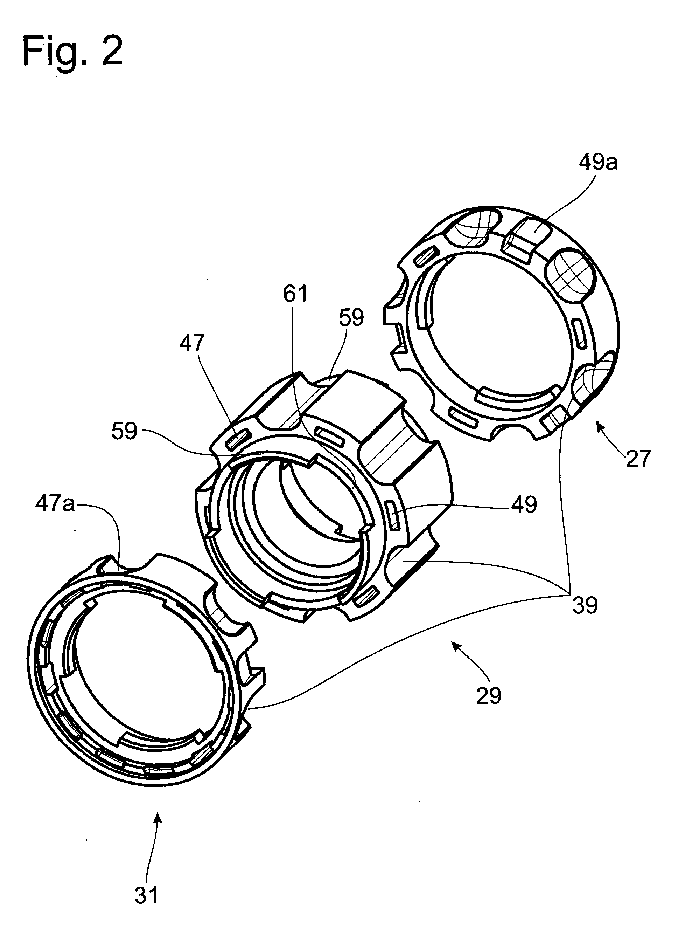

Dem Anschlussring nachgeordnet ist eine dreiteilige Kombination umfassend einen ersten Kopfring 27, einen Mittelring 29 und einen zweiten Kopfring 31. Diese Kombination ist in der Fig. 2 als Explosionsdarstellung gezeigt. Beide Kopfringe sind als Gleichteile ausgeführt und tragen Anschlagflächen 33; 35, auf Tragscheiben 33T; 35T. Zwischen den Anschlagflächen 33; 35 steuert ein axial beweglicher Schaltring 37 eine Strömungsverbindung 39. Dazu verfügen die Kopfringe 27; 31 und der Mittelring 29 auf ihrer äußeren Mantelfläche über mehrere axial verlaufende Nuten. Ein Spannring 41 fixiert die gesamte Reihenanordnung am Kolben.

Zwei zwischen den Anschlagflächen 33; 35 und dem Schaltringring vorliegende Ringräume 43; 45, die Teile der Strömungsverbindung 39 bilden, verfügen über Bypässe 47; 49 mit Austrittsöffnungen 47A; 49A, die dafür sorgen, dass der Schaltring bis zu einer Schließstellung an den Anschlagflächen 33; 35 beidseitig mit Dämpfmedium beaufschlagt wird. Die Austrittsöffnungen 47A; 49A können unterschiedlich lang ausgeführt sein, um richtungsabhängig einen unterschiedlich steilen Dämpfkraftanstieg zu erzeugen. Rückschlagventile 51; 53 verhindern einen hydraulischen Kurzschluss. Zusätzlich kommen noch innerhalb einer Schaltringnut axial bewegliche Ventilringe 55; 57 zur Anwendung, wobei die Schaltringnuten von Rückseiten der Tragscheiben 33T; 35T und Stirnflächen des Anschlussrings 21 und des Spannrings 31 begrenzt werden. Die Prinzipien der Strömungswege und die Funktionsweise der gesamten Kolbenanordnung entspricht der DE 10 2005 045 267 A1, die Teil dieser Figurenbeschreibung sein soll, so dass auf eine ausführliche Beschreibung verzichtet werden kann.

Wesentlich ist, dass die als Hülsenkörper ausgeführten Kopfringe 27; 31 und der Mittelring 29 die axial verlaufenden Kanäle für die Bypässe 47; 49 und auf ihren Mantelflächen die Nuten für die Strömungsverbindung 39 zwischen den Anschlagflächen 33; 35 aufweisen. Aus der Fig. 2 ist ersichtlich, dass durch stufenförmige Kontaktflächen 59; 61 zwischen den Kopfringen 27; 31 und dem Mittelring 29 jeweils ein in Umfangsrichtung wirksamen Drehorientierungsprofil, geschaffen wird, dass die korrekte Zuordnung der Bypässe 47; 49 mit den zugehörigen Austrittsöffnungen 47A und 49A sicherstellt.

Die Kopfringe und der Mittelring verfügen über Zentrierflächen 63, 65, die eine Desachsierung der Bauteile innerhalb der Reihenanordnung verhindern. Innerhalb axialer Überdeckungsbereiche 67; 69 sind die Kopfringe und der Mittelring mit zueinander ausgerichteten offenen Stufenprofilen ausgeführt, die im Endmontagestadium Ringnuten für Dichtungen 71; 73 bilden.

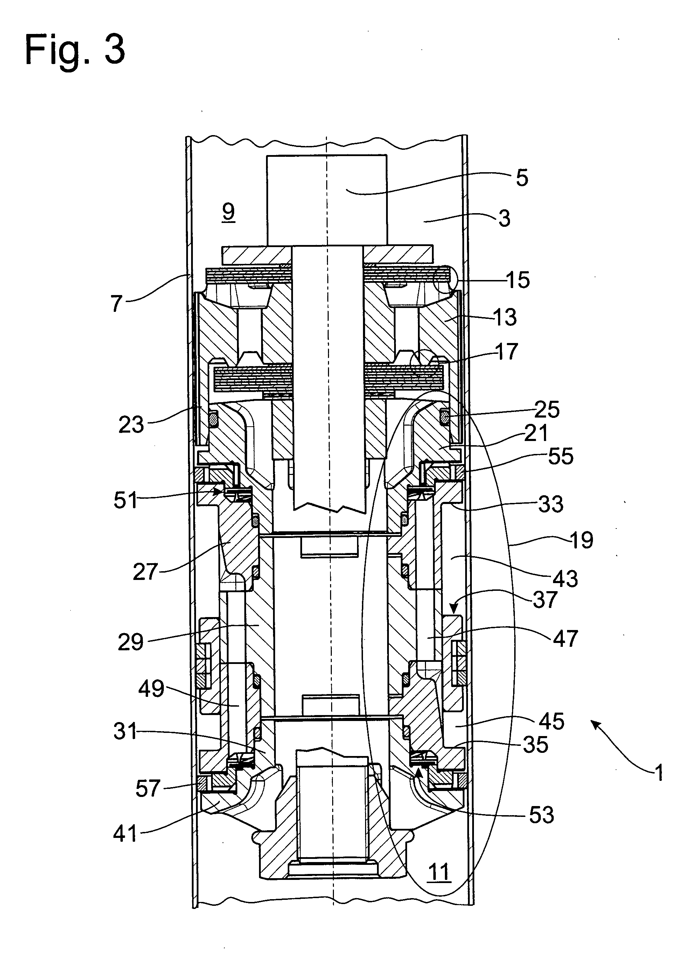

Die Fig. 3 zeigt eine Abwandlung zur Fig. 1, wobei der Unterschied darin besteht, dass die Anschlagflächen 33; 35 einteilig an den Kopfringen 27; 31 ausgeführt sind. Diese Lösung ist besonders robust und bietet die Möglichkeit, dass der Anschlussring 21 oder der Spannring 41 direkt mit den Kopfteilen 27; 31 die Schaltringnut für die axial beweglichen Ventilringe 55; 57 bilden.

## Patentansprüche

1. Schwingungsdämpfer mit amplitudenselektiver Dämpfkraft, umfassend eine Kolbenstange, die in einem dämpfmittelgefüllten Zylinder axial beweglich geführt ist, wobei die Kolbenstange eine Kolbenanordnung trägt, die den Zylinder in einen kolbenstangenseitigen und einen kolbenstangenfernen Arbeitsraum unterteilt, wobei die Kolbenanordnung eine Baueinheit aufweist, die zwischen den Arbeitsräumen eine Strömungsverbindung bestimmt, die in Abhängigkeit der Kolbenstangenbewegung von einem zwischen zwei Anschlagflächen axial beweglichen Schaltring gesteuert wird, der über jeweils mindestens einen Bypass pro amplitudenselektiv gesteuerter Dämpfkraftrichtung beidseitig innerhalb der Strömungsverbindung mit Dämpfmedium beaufschlagt wird, wobei die Strömungsverbindung und der mindestens eine Bypass von einer Reihenanordnung mehrere Hülsenkörper gebildet werden,
**dadurch gekennzeichnet,**
**dass** sämtliche in der Reihenanordnung zwischen den beiden Anschlagflächen (33; 35) verwendeten Hülsenkörper (27; 29; 31) jeweils axial verlaufende Kanäle für den mindestens einen Bypass (47; 49) und auf ihrer Mantelfläche die Strömungsverbindung (39) zwischen den Anschlagflächen (33; 35) aufweisen.

2. Schwingungsdämpfer nach Anspruch 1,
**dadurch gekennzeichnet,**
**dass** die Reihenanordnung aus einem Mittelring (29) und zwei Kopfringen (27; 31) besteht.

3. Schwingungsdämpfer nach Anspruch 2,
**dadurch gekennzeichnet,**
**dass** die Kopfringe (27; 31) als Gleichteile ausgeführt sind.

4. Schwingungsdämpfer nach Anspruch 1,
**dadurch gekennzeichnet,**
**dass** zwischen dem Mittelring (29) und den Kopfringen (27; 31) in Umfangsrichtung ein Drehorientierungsprofil ausgeführt ist.

5. Schwingungsdämpfer nach Anspruch 2,
**dadurch gekennzeichnet,**
**dass** die Hülsenkörper (27; 29; 31) innerhalb der Reihenanordnung Zentrierflächen (63; 65) zur radialen Positionierung aufweisen.

6. Schwingungsdämpfer nach Anspruch 2,
**dadurch gekennzeichnet,**
**dass** die Hülsenkörper (27; 29; 31) innerhalb eines axialen Überdeckungsbereichs (67; 69) jeweils mit einem zueinander ausgerichteten offenen Stufenprofil ausgeführt sind, die im montierten Zustand eine Ringnut für eine Dichtung (71; 73) bilden.

7. Schwingungsdämpfer nach Anspruch 1,
**dadurch gekennzeichnet,**
**dass** die Reihenanordnung zwischen einem Spannring (41) und einem Anschlussring (21) an dem Kolben (13) fixiert ist.

8. Schwingungsdämpfer nach Anspruch 2,
**dadurch gekennzeichnet,**
**dass** der Kopfring (27; 31) mit einer axialen Stirnfläche in Verbindung mit dem Spannring (41) und/oder dem Anschlussring (21) eine Schaltringnut für einen axial beweglichen Ventilring (55; 57) bilden.
